# EUROPÄISCHE PATENTSCHRIFT

(11) **EP 0 776 128 B1**
(45) Veröffentlichungstag und Bekanntmachung des Hinweises auf die Patenterteilung: **18.06.2003**
(21) Anmeldenummer: 96116984.4
(22) Anmeldetag: 23.10.1996
(51) Int. Cl.: H04N 5/63

(54) **Fernbedienbare Videogeräteanordnung**
Remotely controlled video apparatus
Dispositifs vidéo télécommandés

(30) Priorität: 27.10.1995 DE 19540077
(43) Veröffentlichungstag der Anmeldung: 28.05.1997
(73) Patentinhaber: NOKIA TECHNOLOGY GmbH, 44718 Bochum (DE)
(72) Erfinder: Reime, Gerd, 75328 Schömberg (DE)
(74) Vertreter: TER MEER STEINMEISTER & PARTNER GbR

(56) Entgegenhaltungen:
- EP-A- 0 356 553
- EP-A- 0 477 891
- EP-A- 0 610 700
- EP-A- 0 632 563
- DE-A- 4 302 636
- US-A- 4 903 130

## Beschreibung

Die Erfindung betrifft eine fernbedienbare Videogeräteanordnung mit einem Fernsehgerät und mindestens einem peripheren Videogerät, das ein Ausgangssignal bereitstellt, welches mit dem Fernsehgerät zumindest visuell wiedergegeben werden kann. Derartige periphere Videogeräte können Videorecorder, Satellitenreceiver, Bildplattenspieler, Multimediaterminals in Form von sogenannten Set-Top-Boxen oder ähnliches sein, die drahtlos fernbedienbar sind.

Ein bekanntes Problem besteht darin, daß ein fernbedienbares Fernsehgerät in der Regel nicht nur in einen aktiven Betrieb, bei dem Betriebsenergie aus einem Energienetz aufgenommen wird, und in einen Ruhezustand, bei dem das Gerät vom Energienetz getrennt ist, geschaltet werden kann, sondern auch in einen Wartebetrieb (Stand-by Betrieb). Im Wartebetrieb wird eine Einrichtung zum Empfangen und Umsetzen von Fernbediensignalen empfangsbereit gehalten, um ein Einschalten in den aktiven Betrieb mittels eines Fernbediengebers zu ermöglichen. Das heißt, daß das Gerät mittels eines Fernbediengebers nicht in den ausgeschalteten Zustand sondern nur in einen energiearmen Wartebetrieb gesetzt werden kann, bei dem Teile der Schaltung ständig Betriebsstrom aus dem Energienetz erhalten. Gegenwärtig werden eine Vielzahl von Geräten benutzt und teilweise noch angeboten, deren Schaltnetzteil im Wartebetrieb vom Energienetz nicht abschaltbar ist. Da bei solchen Geräten während des Wartebetriebs oftmals neben dem IR-Empfänger auch die Gerätesteuerung und die Schaltung zum Entmagnetisieren der Bildröhre Betriebsstrom vom Netzteil erhalten, wird im Wartebetrieb eine beachtenswerte Menge elektrischer Energie umgesetzt, die im Bereich von 5 bis 20 Watt liegt. Ein Teil der Schaltung ist ständig mit dem Energienetz verbunden. Damit erhöht sich, insbesondere wenn sich das Netzteil im Dauerbetrieb befindet, die Gefahr des Auftretens von Störungen und Defekten, die sogar Brände zur Folge haben können. Beispielsweise können Überspannungen im Netz, die unter anderem bei Gewittern entstehen, durch eine hohe Spannungsbelastung Bauelemente zerstören.

Bisher wenig beachtet wurde die Tatsache, daß auch die eingangs genannten peripheren Videogeräte mittels eines Fernbediensystems zwar in den Wartebetrieb jedoch nicht in den ausgeschalteten Zustand geschaltet werden können. Videorecorder und Satellitenreceiver haben oftmals AUS/EIN-Schalter, mit denen primärseitig keine vollständige Netztrennung möglich ist. Dieses liegt einerseits darin begründet, daß diese Geräte programmierbare Timer aufweisen, die den Beginn von ausgewählten Fernsehsendungen überwachen, um sich zum Sendebeginn rechtzeitig einzuschalten. Ein solches Programmierteil ist in jedem konventionellen Videorecorder vorhanden. Darüber hinaus enthalten auch Satellitenreceiver derartige Programmierteile zum selbsttägigen Ausführen von Videoaufnahmen via Satellit. Andererseits besitzen beide Videogeräte zur effektiven Verteilung des HF-Signals vom Antennenanschluß der terristischen Fernsehantenne einen HF-Verstärker zum Durchschleifen des HF-Signals, der auch zum Empfang einer terristischen Fernsehübertragung Betriebsenergie benötigt.

Obwohl Fernsehgeräte mit modernen Schaltungen, wie sie beispielsweise aus der Druckschrift DE 42 40 351 C bekannt sind, während des Wartebetriebes heute weniger als 100 mW elektrische Energie umsetzen, liegt der Energiekonsum für den Wartebetrieb von peripheren Videogeräten in der Regel bei etwa 10 W pro Gerät. Selbst Videorecorder und Satellitenreceiver der aktuellen Fertigung erreichen in dieser Betriebsart noch Werte von etwa 6 W. Das bedeutet, in einem Haushalt, in dem sich ein Fernsehgerät, ein Videorecorder und ein Satellitenreceiver konventioneller Bauart befinden, werden im Wartebetrieb zwischen 12 W und 35 W elektrische Leistung konsumiert.

Ein Fernsehgerät, dessen Schaltnetzteil während des Wartebetriebes vom Netz galvanisch getrennt wird, ist aus der deutschen Patentschrift DE 26 20 191 C2 bekannt.
Dieses Gerät enthält einen von einem Bereitschaftsnetzteil gespeisten Fernbedienempfänger, das vom Schaltnetzteil des Geräts unabhängig ist und einen Netztrafo enthält. Der Fernbedienempfänger betätigt ein Relais, dessen Kontakte in der Netzzuleitung liegen. Während des Wartebetriebes ist somit das Schaltnetzteil zum Vermeiden von Schäden durch Dauerbetrieb vom Energienetz abgeschaltet. Nachteilig ist jedoch, daß das Bereitschaftsnetzteil im Wartebetrieb verhältnismäßig viel Ruhestrom benötigt.

Aus der bereits erwähnten Druckschrift DE 42 40 351 C ist ebenfalls ein Fernsehgerät bekannt, dessen Schaltnetzteil während des Wartebetriebes mittels einer vorgeschalteten fernbedienbaren Netzschalteinrichtung zum Vermeiden von Schäden durch einen Dauerbetrieb vom Netz galvanisch getrennt wird. Dazu werden ein Fernbedienempfänger und ein Mikrorechner von einem transformatorlosen Bereitschaftsnetzteil gespeist, das die Betriebsspannung mit Hilfe eines kapazitiven Spannungsteilers aus dem Energienetz herunterteilt. Das empfangene Fernbediensignal wird dem Mikrorechner zugeführt und dort ausgewertet, um beim Erkennen eines Ein- oder Ausschaltbefehls ein Relais, dessen Kontakte ebenfalls in der Netzzuleitung liegen, zu betätigen. Während des Wartebetriebes beträgt die Leistungszufuhr etwa 100 mW.

Bei den bisher beschriebenen Lösungen ist von Nachteil, daß einschlägige Sicherheitsvorschriften den Fernsehgerätehersteller verpflichten, unabhängig von der Größe des Energiekonsums im Wartebetrieb dem Nutzer optisch anzuzeigen, das Teile der Geräteschaltung Betriebsenergie aus dem Netz erhalten. Eine derartige Anzeige benötigt in der Praxis etwa so viel Betriebsstrom wie die erwähnte fernbedienbare Netzschalteinrichtung mit moderner Schaltungskonzeption, so daß viele Hersteller den Mehraufwand zum Realisieren von energiesparenden Fernsehgeräten scheuen, die eine fernbedienbare Netzschalteinrichtung aufweisen.

Darüber hinaus ist auch bekannt, alle Schaltungsteile eines Fernsehgeräts nach dem Benutzen vom Energienetz zu trennen. Beispielsweise ist aus der Druckschrift EP-B1 0 075 194 eine Lösung bekannt, bei der ein IR-Empfänger und ein Relais zum Anschalten des Fernsehgeräts an das Energienetz von einem Akkumulator gespeist werden. Dieser wird von Solarzellen, die am Gehäuse des Fernsehempfängers angeordnet sind, von der Energie des Raumlichtes geladen. Die Schaltung ermöglicht bei etwa 5 V Betriebsspannung, den Betriebsstrom auf etwa 1 mA zu reduzieren. Diese Leistung bringen Solarzellen schon bei normaler Zimmerbeleuchtung auf.

Des weiteren ist aus der Druckschrift US-3 088 009 eine Netzschalteinrichtung bekannt, die in die Netzzuführung eines zu schützenden Geräts eingeschleift wird und selbsttätig die Stromzufuhr zum Gerät solange aufrechthält, wie die Stromaufnahme des Geräts einen bestimmten Mindestwert überschreitet. Die dafür benötigte Betriebsenergie entnimmt eine Relaiswicklung, die in Serie zur Netzzuführung liegt, der Stromzufuhr zum Gerät.

Die Druckschrift WO 93/09634 beschreibt verschiedene Netzschalteinrichtungen zum Einschleifen in die Netzleitung des zu schützenden Geräts. Nach kurzzeitiger Netzspannungszufuhr, zum Beispiel durch einen parallelliegenden Tastschalter wird, wie bei der Lösung entsprechend der Druckschrift US-3 088 009, der geschlossene Zustand selbsttätig während des Überschreitens eines Mindestwertes für die Stromaufnahme aufrecht gehalten. Die dafür benötigte Betriebsenergie wird ebenfalls aus der Stromzufuhr zum Gerät abgeleitet. Auf diese Weise ist gesichert, daß die Netzschalteinrichtung infolge der gesunkenen Stromaufnahme öffnet, wenn das Gerät in den Wartebetrieb geschaltet wird.
Da jedoch sowohl Fernsehgeräte als auch Videogeräte aus Sicherheitsgründen nur in den Wartebetrieb und nicht in den aktiven Betrieb schalten dürfen, wenn bei geschlossenem Netzschalter extern Netzspannung zugeführt wird, muß parallel mit dem Schließen des Tasters dem Gerät ein entsprechender Einschaltbefehl erteilt werden. Wenn die Netzschalteinrichtung, wie vorgesehen, außerhalb des Fernsehgeräts angeordnet ist, können die Schalter gleichzeitig nur mit zwei Händen betätigt werden. Eine solche Bedienweise ist lästig. Anderenfalls müssen beide Taster am Gerät mechanisch gekoppelt werden, um beide Funktionen mit einer Betätigung zu realisieren. Ein Einschalten mit dem Fernbediengeber ist also mit der Mehrzahl der in der Druckschrift beschriebenen Lösungen nicht möglich. Eine Ausnahme bildet eine Ausführungsform, die, wie andere bekannte Lösungen, mit einem IR-Detektor und einer Bereitschaftsstromversorgung ausgestattet ist. Damit weist diese Lösung jedoch auch die bekannten Nachteile auf.

Ein weiteres bekanntes Problem wird im besonderen bei einer Videogeräteanordnung durch separate Fernbediensysteme der verschiedenen Geräte hervorgerufen. Im allgemeinen besteht zwischen den Fernbediensystemen von Fernsehgerät und peripheren Videogeräten keine Datenverbindung und jedes Fernbediensystem reagiert auf Kodewörter mit einer eigenen gerätespezifischen Adresse. Das setzt voraus, daß jedes Fernbediensystem mit einer eigenen Stromversorgung betriebsbereitgehalten wird. Selbst für die Geräte von einem Hersteller existiert in der Regel kein gemeinsamer Fernbedienbefehl, mit dem zum Beispiel der Nutzer nach dem Gebrauch alle benutzten Geräte mit einer Betätigung den aktiven Betrieb beenden kann. Zum Verlassen des aktiven Betriebes werden sogar verschiedene Fernbediengeber benötigt, wenn die Videogeräteanordnung Geräte verschiedener Hersteller enthält. Deshalb verbleiben periphere Videogeräte nach dem Gebrauch häufig noch im aktiven Betrieb, womit sich der Energieumsatz gegenüber dem Wartebetrieb entsprechend erhöht.

Weitere Schaltungen im Zusammenhang mit der Steuerung bzw. Schaltung von elektrischen Verbrauchern sind aus US-4,903,130, EP-A-0 610 700 und EP-A-0 632 563 bekannt.

Ausgehend von den Mängeln der bekannten Lösungen, liegt der Erfindung die Aufgabe zugrunde, eine fernbedienbare Videogeräteanordnung mit einem Fernsehgerät und mindestens einem peripheren Videogerät, das ein Ausgangssignal zum Wiedergeben mit dem Fernsehgerät bereitstellt, so auszugestalten, daß mindestens das Fernsehgerät mit Hilfe eines drahtlosen Fernbediensystems in beiden Richtungen zwischen dem netzgetrennten Ruhezustand und dem aktiven Betrieb umschaltbar ist und daß der Energiekonsum der Geräte gegenüber dem Stand der Technik gesenkt wird. Darüber hinaus soll mit der Lösung das Ausschalten von nicht benötigten peripheren Videogeräten vereinfacht werden.

Die Erfindung geht von einer fernbedienbaren Videogeräteanordnung aus, bei der ein Fernsehgerät und periphere Videogeräte, wie beispielsweise Videorecorder und Satellitenreceiver, jeweils eine eigene separate Netzleitung zum Zuführen von Netzstrom aus einem Energienetz aufweisen. Darüber hinaus enthält jedes Gerät ein auf IR-Signale reagierendes Fernbedienteil, welches ein Umschalten zwischen dem aktiven Betrieb und dem Wartebetrieb ermöglicht und das während des Wartebetriebs durch Zufuhr von Betriebsstrom betriebsfähig gehalten wird.
Zur Lösung der Aufgabe setzt die Erfindung voraus, daß bei einer solchen Videogeräteanordnung in der Regel mindestens ein peripheres Videogerät im Wartebetrieb durch Zufuhr von Netzstrom betriebsbereit gehalten wird, um mit Hilfe eines programmierbaren Timers ein selbsttätiges Überwachen des Beginns von Fernsehsendungen zu ermöglichen, die ein Nutzer zum Aufzeichnen ausgewählt hat.

Das bedeutet, in diesem peripheren Gerät muß auch im Wartebetrieb ein Bereitschaftsnetzteil mit dem Energienetz verbunden sein, um entsprechende Kontroll- und Steuermittel betriebsbereit zu halten.

Dieses nutzt die Erfindung zum Lösen der Aufgabe dadurch, daß erfindungsgemäß ein peripheres Videogerät, vorzugsweise mit einem programmierbaren Timer, mindestens einen Netzausgang zum Anschließen der Netzleitung des Fernsehgerätes und/oder eines weiteren peripheren Videogeräts aufweist. In Serie zum Netzausgang liegt ein steuerbarer Netzschalter, der über einen im Videogerät befindlichen IR-Empfänger mittels IR-Signale betätigbar ist und mit dem das am Netzausgang angeschlossene Gerät vom Energienetz getrennt werden kann. Dazu hält ein Netzteil des peripheren Videogeräts unabhängig vom aktiven Betrieb sowohl die Steuerung des Netzschalters als auch den IR-Empfänger betriebsbereit, so daß das am Netzausgang angeschlossene Gerät mit Hilfe eines Fernbediengebers an das Energienetz geschaltet werden kann, ohne daß eine elektronische Schaltung im angeschlossenen Gerät durch Zuführen von Betriebsstrom betriebsbereit gehalten wird.

Die abhängigen Ansprüche stellen spezielle vorteilhafte Ausführungformen der Erfindung dar, die im folgenden gemeinsam mit den Vorteilen anhand von Figuren dargestellt werden. Die Figuren zeigen im einzelnen:
- Fig. 1: eine Videogeräteanordnung entsprechend der Erfindung bestehend aus einen peripheren Videogerät und einem Fernsehgerät
- Fig. 2: ein Prinzipschaltbild eines peripheren Videogeräts mit der Darstellung von einzelnen Details zum Realisieren einer besonderen Ausführungsform der Erfindung

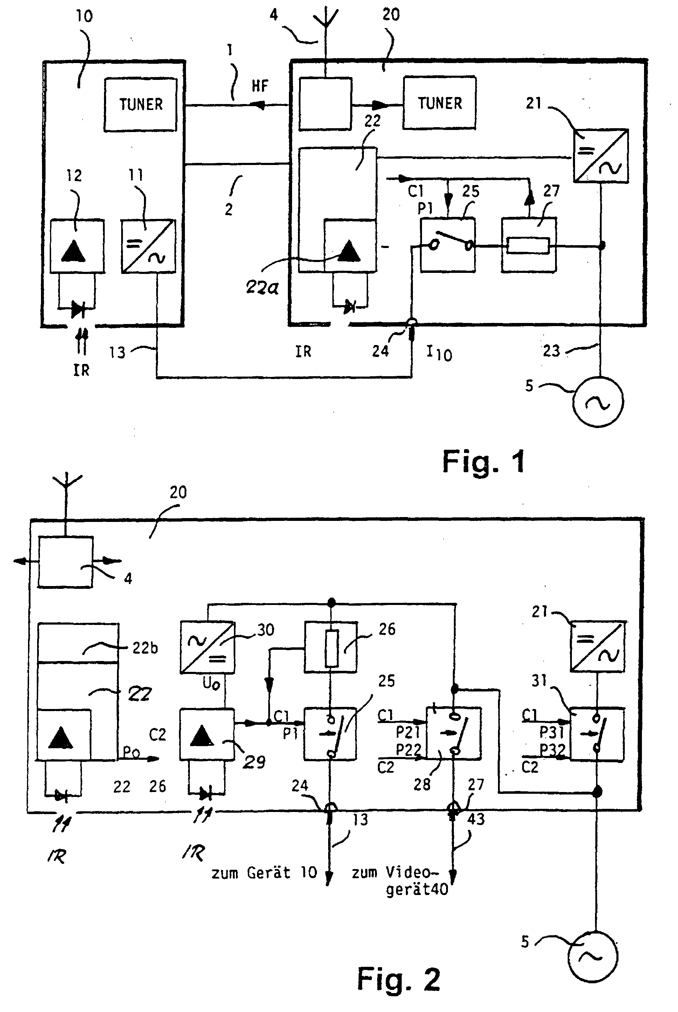

In der Figur 1 ist eine fernbedienbare Videogeräteanordnung schematisch dargestellt, die aus einem Gerät 10, das zum Beispiel ein Fernsehgerät ist, und einem peripheren Videogerät 20 besteht. Zum Übertragen eines Fernsehsignals oder eines Wiedergabesignals einer Aufzeichnung sind beide Geräte über ein Antennenkabel 1 und ein Videokabel 2 miteinander verbunden. Im Videogerät 20 befindet sich ein elektronischer Verteiler 3 für ein Fernsehsignal HF, das eine Antenne 4 liefert zu den Tunern des Geräts 10 und des Videogeräts 20. Sowohl das Gerät 10 als auch das periphere Videogerät 20 weisen ein Netzteil 11 bzw. 21 und ein Fernbedienteil 12 bzw. 22 auf. Das Videogerät 20 ist über eine Netzleitung 23 mit dem örtlichen Energienetz 5 verbunden ist und weist einen Netzausgang 24 auf, an dem das Gerät 10 über eine Netzleitung 13 angeschlossen ist, bei dem ein nicht näher dargestellter mechanischer Betriebsschalter angeschlossen ist.
Vor dem Netzausgang 24 ist ein elektronisch stellbarer Netzschalter 25 angeordnet. Der Netzschalter 25 weist einen Stelleingang P1 auf und kann entweder ein mechanisches Relais mit einem Treiberverstärker, ein Triac oder ein Thyristor jeweils mit entsprechender Ansteuerschaltung sein.
An den Stelleingang P1 ist ein IR-Empfänger 22a zum Empfangen und Erkennen von IR-Signalen IR, die von einem nicht dargestellten Fernbediengeber ausgesandt werden, angeschlossen.

In einer bevorzugten Ausführungsform der Erfindung ist der IR-Empfänger 22a so ausgelegt, daß er beim Eintreffen von IR-Signalen beliebigen Inhalts den Netzschalter 25 für eine Haltezeit von wenigen Sekunden betätigt, um den Netzausgang 24 mit dem Energienetz 5 zu verbinden. Der Netzschalter 25 ist mit einer Strommeßschaltung 26 gekoppelt, die den Netzstrom I₁₀ mißt, der über den Netzausgang 24 fließt.

Unabhängig vom Empfang weiterer IR-Signale IR hält die Strommeßschaltung 26 den Netzschalter 25 so lange geschlossen, wie der über den Netzausgang 24 fließende Netzstrom I₁₀ einen Mindestwert überschreitet.

Dabei nutzt die Erfindung den Effekt, daß herkömmliche Fernbediengeber für die Zeit, in der ein Nutzer eine Taste betätigt, ein IR-Signal senden, bei dem ein Kodewort zum Auslösen einer entsprechenden Gerätefunktion mit einer Geräteadresse fortlaufend wiederholt wird. Unmittelbar nach dem Eintreffen eines beliebigen IR-Signals erzeugt der IR-Empfänger des Videogeräts 20 ein Steuersignal C1 zum Schließen des Netzschalters 25. Das am Netzausgang angeschlossene Gerät 10 erhält Netzspannung Uₒ und wird damit in den Wartebetrieb gesetzt. Dabei ist dessen Fernbedienteil 12 zum Empfangen und Dekodieren der Wiederholungen des Kodewortes bereit. Sendet der Fernbediengeber jenes Kodewort, welches dem Gerät 10 zum Einschalten dient, so schaltet dieses in den Betriebszustand. Da das Gerät 10 im aktiven Betrieb wesentlich mehr Netzstrom I₁₀ aufnimmt als im Wartebetrieb, erkennt die Strommeßschaltung 26 ein Überschreiten des Mindestwertes und generiert ebenfalls das Steuersignal C1, so daß der Netzschalter 25 unabhängig vom Empfang eines IR-Signals über die Haltezeit hinaus geschlossen bleibt. Erhält das Fernbedienteil jedoch nicht das entsprechende Kodewort, weil z. B. das ausgesandte Signal ein anderes Gerät betrifft, so unterbleibt folgerichtig das Einschalten des Geräts 10. Der Netzstrom I₁₀ bleibt unter dem erforderlichen Mindestwert der Strommeßschaltung 26 und der Netzschalter 25 öffnet nach Ablauf der Haltezeit die Verbindung zum Energienetz 5. Das bedeutet, wenn der IR-Empfänger im Videogerät 20 IR-Signale erhält, die das angeschlossene Gerät 10 nicht betreffen, schaltet dieses nur für die kurze Haltezeit vom netzgetrennten Ruhezustand in den energiearmen Wartebetrieb, ohne daß es in den aktiven Betrieb geht. Das Auschalten des Geräts 10 erfolgt in bekannter Weise durch Umschalten über das Fernbedienteil 12 in den Wartebetrieb mittels eines entsprechenden IR-Signals. Damit sinkt der Netzstrom I₁₀ am Netzausgang und die Strommeßschaltung 26 bewirkt ein Öffnen des Netzschalters 25 und das Gerät 10 wird vom Energienetz 5 getrennt.
Die Strommeßschaltung 26 bewirkt somit, daß der Netzschalter 25 auf entsprechende IR-Signale reagiert, ohne daß das Fernbedienteil 22 den Inhalt der IR-Signale für das Gerät 10 erkennt. Da sich beide Geräte in der Regel in unmittelbarer Nähe befinden, empfängt das Fernbedienteil 12 des Geräts 10 die ausgesandten IR-Signale immer parallel zum IR-Empfänger 22a im Videogerät 20 und reagiert bereits kurze Zeit nach dem Schließen des Netzschalters 25 mit dem Umschalten in den aktiven Betrieb.

Die beschriebene Ausführungsform der Erfindung bietet den Vorteil, daß am Netzausgang 24 des Videogeräts 20 ein Gerät 10 mit einem Fernbedienteil 12 für ein Fernbediensystem mit einer beliebigen Signalstruktur ohne Beeinträchtigung der Funktion angeschlossen werden kann.

Nach einer besonderen Ausführungsform der Erfindung wird, wie in Fig. 1 dargestellt, der IR-Empfänger 22a auch für das Fernbedienteil 22 des Videogeräts 20 benutzt. Dadurch wird der materielle Aufwand verringert.

Darüber hinaus kann das Fernbedienteil 22 des Videogeräts 20 so ausgestaltet werden, daß beim Eintreffen von IR-Signalen, die das Videogerät 20 selbst betreffen, kein Steuersignal zum Schließen des Netzschalters generiert wird. Auf diese Weise wird beim angeschlossenen Gerät 10 ein unnötiges Umschalten zwischen dem netzgetrennten Ruhezustand und dem Wartebetrieb verhindert, wenn das Videogerät 20 ohne das Gerät 10 betrieben wird. Dieses ist zum Beispiel dann vorteilhaft, wenn das Videogerät 20 ein Videorecorder ist. Mit diesem können verschiedene Tätigkeiten ohne das Fernsehgerät ausgeführt werden, wie das Kopieren oder Zurückspulen von Kassetten.

Entsprechend einer anderen vorteilhaften Ausführungsform der Erfindung ist das Fernbedienteil 22 des Videogeräts 20 so ausgelegt, daß es zusätzlich zu den IR-Signalen aus dem Zeichensatz für das eigene Fernbediensystem auch IR-Signale aus dem Zeichensatz eines anderen Fernbediensystems erkennt und dekodiert, insbesondere solche IR-Signale, die an das Gerät 10 gerichtet sind und ein Umschalten zwischen dem Wartebetrieb und dem aktiven Betrieb bewirken. Neben seiner üblichen Funktion betätigt somit auch das Fernbedienteil 22 beim Eintreffen eines entsprechenden IR-Signals den Netzschalter 25, obwohl das empfangene IR-Signal nicht zum eigenen Zeichensatz gehört. Dazu wird die Software für das Fernbedienteil 22 dahingehend erweitert, daß der Nutzer neben einem ersten bereits fest installierten Dekoderprogramm zum Identifizieren des Befehlssatzes, der zum Auslösen von geräteinternen Funktionen benötigt wird, noch ein zweites Dekoderprogramm installieren kann, das zumindest die Ferndienbefehle für EIN und AUS aus dem Zeichensatz des Geräts 10 identifiziert.
In der Praxis wird auch in diesem Fall wieder der beschriebene Effekt ausgenutzt, daß ein Fernbediengeber während der Betätigung einer Taste das entsprechende IR-Signal wiederholt aussendet. Wenn das Fernbedienteil 22 mit dem ersten Dekoderprogramm einen Fernbedienbefehl nicht erkennt, geht es davon aus, daß es sich um einen Befehl für das Gerät 10 handelt und prüft mit dem zweiten Dekoderprogramm die Wiederholungen. Auf diese Weise wird das Gerät 10 nur dann mit dem Energienetz 5 verbunden, wenn tatsächlich der entsprechende Fernbedienbefehl zum Einschalten gesendet wird. Darüber hinaus bietet die spezielle Ausführungsform der Erfindung den Vorteil, daß der Schaltungsaufwand für die Strommeßschaltung 26 durch die Installation einer entsprechenden Software für das Fernbedienteil 22 ersetzt werden kann. Das Anpassen des zweiten Dekoderprogramms an die Signalstruktur und den Zeichensatz des Gerätes 10 kann, beispielsweise wie bei einem programmierbaren Universal-Fernbediengeber, durch ein entsprechendes Installationsmenü erfolgen. Dabei werden dem Fernbedienteil 22 des Videogeräts 20 während der Installation die entsprechenden Kodewörter als IR-Signale mit dem Fernbediengeber des Geräts 10 übermittelt. Das Fernbedienteil 22 speichert die Signalstruktur der Kodewörter für die zukünftige Wiedererkennung.

Die bisher dargestellten Ausführungsformen einer Videogeräteanordnung entsprechend der Erfindung gewährleisten nur, daß während des Wartebetriebs ein Zuführen von Netzenergie zum angeschlossenen Gerät 10 verhindert wird, während beim peripheren Videogerät 20 die Stromaufnahme im Wartebetrieb unverändert hoch bleibt.

Grundsätzlich ist jedoch auch möglich, am Videogerät 20 parallel zum Netzausgang 24 weitere Netzausgänge anzuordnen, die mit dem selben Netzschalter 25 ein- und ausgeschaltet werden können. Auf diese Weise werden weitere periphere Videogeräte, wie beispielsweise ein Satellitenreceiver gleichzeitig mit dem Fernsehgerät ein- und ausgeschaltet. Dieses verhindert jedoch das Realisieren von einigen Anwendungen der Videogeräteanordnung, insbesondere solchen, bei denen mehrere periphere Videogeräte ohne das Fernsehgerät betrieben werden. Dieses ist zum Beispiel das Aufnehmen von Fernsehsendungen, die mit einem Satellitenreceiver empfangen werden. Unabhängig davon, welches der beiden peripheren Videogeräte mit Netzausgängen versehen ist, das zweite für die Aufnahme erforderliche Gerät ist immer dann ohne Netzspannung, wenn das Fernsehgerät ausgeschaltet ist.

Fig. 2 zeigt deshalb eine Ausführungsform zur Lösung des Problems.

Bei dieser Ausführungsform ist das Fernbedienteil 22 des peripheren Videogeräts 20 mit einem programmierbaren Timer 22b dargestellt. Dieser speichert Daten von ausgewählten Fernsehsendungen und vergleicht diese mit der aktuellen Zeit und gegebenenfalls mit einem empfangenen Signal zum Kennzeichen der aktuellen Fernsehsendung (VPS-Signal), um zum Beginn einer solchen Sendung das Videogerät 20 selbstätig zu starten. Das Fernbedienteil 22 hat einen Ausgang Po. An diesem liegt sowohl dann ein entsprechendes zweites Steuersignal C2, wenn für den Timer 22b derartige gültige Daten für noch bevorstehende Fernsehsendungen gespeichert sind, als auch dann, wenn sich das erste periphere Videogerät im aktiven Betrieb befindet.
Im Gegensatz zum Ausführungsbeispiel nach Fig. 1 weist das periphere Videogerät 20 einen zweiten Netzausgang 27 zum Anschluß einer Netzleitung 43 eines zweiten peripheren Videogeräts 40 auf, der in Serie zu einem zweiten elektronisch stellbaren Netzschalter 28 liegt. Der Netzschalter 28 hat einen ersten Steuereingang P21 und einen zweiten Steuereingang P22. Dem Steuereingang P21 wird das Steuersignal C1 zugeführt und der Steuereingang P22 ist mit dem Ausgang Po verbunden, an dem das Steuersignal C2 liegt. Die Steuereingänge P21 und P22 dienen zur Entkopplung der Steuersignale C1 und C2.
Die beschriebene Ausführungsform gewährleistet einerseits, daß der Netzschalter 28 im ersten Videogerät 20 das zweite Videogerät 40 mit dem Energienetz 5 verbindet, sowohl wenn sich das Gerät 10 im aktiven Betrieb befindet, als auch wenn für den Timer 22b im ersten Videogerät 20 gültige Daten für noch bevorstehende Fernsehsendungen gespeichert sind oder wenn sich das erste Videogerät 20 im aktiven Betrieb befindet. Somit kann das zweite Videogerät 40 sowohl in Verbindung mit dem Fernsehgerät als auch für Videoaufzeichnungen uneingeschränkt genutzt werden, wobei ein Einschalten des zweiten Videogeräts 40 mit entsprechenden Fernsteuerbefehlen aus seinem Zeichensatz erfolgt.

Andererseits ist gewährleistet, daß das zweite Videogerät 40 automatisch vom Energienetz getrennt wird, wenn das Gerät 10 ausgeschaltet ist und wenn für den Timer 22b im ersten Videogerät 20 keine gültige Daten für noch bevorstehende Fernsehsendungen gespeichert sind oder wenn sich das erste Videogerät 20 im aktiven Betrieb befindet.
Darüber hinaus weist das erste Videogerät 20 einen zweiten IR-Empfänger 29 auf, der aus einem Bereitschaftsnetzteil 30 mit Betriebsspannung Uₒ versorgt wird, sowie einen dritten elektronisch stellbaren Netzschalter 31. Der Netzschalter 31 liegt in der Netzleitung 23 vor dem Netzteil 21 des Videogeräts 20 und weist ebenfalls zwei voneinander entkoppelte Steuereingänge P31 und P32 auf. Der IR-Empfänger 29 ist ein Wechselstromverstärker mit einer IR-Diode und einer Betriebstromaufnahme von weniger als 100 µA, der zum Unterdrücken von Raumlichteinflüssen vorrangig auf IR-Wechsellicht im Frequenzbereich von IR-Fernbediengebern anspricht. Der Steuereingang P31 des dritten Netzschalters 31 ist sowohl mit dem Steuersignalausgang des IR-Empfängers 29 als auch mit dem Steuersignalausgang der Strommeßschaltung 27 verbunden. Der Steuereingang P32 ist mit dem Ausgang Po des Fernbedienteils verbunden.

Die beschriebene Ausführungsform zeigt folgende vorteilhafte Wirkungen. Vor der ersten Inbetriebnahme der Videogeräteanordnung sind die Netzleitungen 13 und 43 des Gerätes 10 und des zweiten Videogerätes 40 durch die Netzschalter 24 und 28 vom Energienetz 5 getrennt. Ebenso trennt der Netzschalter 30 das Netzteil 21 des ersten Videogeräts 20 vom Energienetz 5. Mit Ausnahme des Bereitschaftsnetzteils 30 und des IR-Empfängers 29 sind somit auch vom Videogerät 20 alle Schaltungsteile vom Energienetz getrennt. Das Videogerät 20 befindet sich in einem ersten Wartebetriebszustand. Aufgrund der geringen Stromaufnahme von IR-Empfänger 29 kann das Bereitschaftsnetzteil 30 in bekannter Weise transformatorlos ausgeführt werden, so daß das Videogerät 20 eine elektrische Leistung von weniger als 0,1 Watt aufnimmt. Da die beiden anderen Geräte 10 und 40 vom Energienetz getrennt sind, liegt die Leistungsaufnahme der Videogeräteanornung ebenfalls unter 0,1 Watt.
Ein Fernbediengeber sendet zur Inbetriebnahme des Gerätes 10 ein entsprechendes Fernbediensignal aus. Dieses empfängt zunächst nur der IR-Empfänger 29, der durch das Bereitschaftsnetzteil 30 betriebsbereit gehalten wird. Der IR-Empfänger 29 generiert für eine kurze Haltezeit ein entsprechendes Steuersignal C1. Das Steuersignal C1 bewirkt ein Schließen der Netzschalter 25, 28 und 31. Infolge des Zuschaltens zum Energienetz 5 werden die Netzteile 11 und 21 in einen Wartebetrieb gesetzt, so das sowohl im Gerät 10 das Fernbedienteil 12 als auch im Videogerät 20 das Fernbedienteil 22, der elektronische Verteiler 3 und die Strommeßschaltung 22 betriebsbereit sind. Das Videogerät befindet sich damit in einem zweiten Wartebetrieb, bei dem gegenüber dem ersten ein höherer Energiebedarf auftritt. Wie bereits erläutert, empfängt und dekodiert das Fernbedienteil 12 im Gerät 10 die Fernbediensignale und schaltet das Gerät 10 in den aktiven Betrieb. Die Strommeßschaltung 26 reagiert auf den Netzstrom I₁₀ über den Ausgang 24 und hält durch Abgabe des Steuersignals C1 die Netzschalter 25, 28 und 31 so lange geschlossen, bis das Gerät 10 ausgeschaltet wird.

Sofern während dieses Vorganges im ersten Videogerät 20 keine gültigen Daten für noch bevorstehende Fernsehsendungen gespeichert wurden oder sich das erste Videogerät 20 beim Ausschalten des Gerätes 10 noch im aktiven Betrieb zum Realisieren von Videoaufnahmen befindet, werden das Gerät 10 und das zweite Videogerät 40 beim Ausschalten von Gerät 10 selbsttätig vom Energienetz getrennt und das erste Videogerät 20 kehrt in den ersten Wartebetrieb zurück. Anderenfalls generiert das Fernbedienteil 22 am Ausgang Po das entsprechende Steuersignal C2, so daß der Netzschalter 25 nur das Gerät 10 vom Energienetz trennt, während erstes und zweites Videogerät 20 und 40 über das jeweilige Fernbediensystem ansprechbar sind.
Bei der dargestellten Ausführungsform der Erfindung kann auch das Videogerät 20 mit einem Fernbediengeber direkt vom ersten in den zweiten Wartebetrieb geschaltet werden.
Es ist vorteilhaft, wenn das erste Videogerät 20 ein Satellitenreceiver oder eine Set-Top-Box ist mit einem Timer und gegebenenfalls einem programmierbaren Fernbediengeber, der auf den Steuerbefehlssatz des zweiten Videogerätes 40, beispielsweise einen Videorecorder, programmierbar ist, um mit diesem automatisch aufnehmen zu können.

## Patentansprüche

1. Fernbedienbare Videogeräteanordnung, die ein Fernsehgerät (10) und mindestens ein peripheres Videogerät (20) enthält, das ein Signal für die Wiedergabe über das Fernsehgerät (10) bereitstellt, wobei beide Geräte (10, 20) je eine separate Netzleitung (13, 23) zum Zuführen von Netzstrom (I₁₀, I₂₀) aus einem Energienetz (5) und je ein auf IR-Signale reagierendes Fernbedienteil (12, 22) aufweisen, welches ein Umschalten zwischen einem aktiven Betrieb und einem Wartebetrieb ermöglicht und während des Wartebetriebs durch Zufuhr von Betriebsstrom betriebsfähig gehalten wird, **gekennzeichnet dadurch, daß** das periphere Videogerät (20) enthält:
mindestens einen Netzausgang (24) zum Anschließen der Netzleitung (13, 43) des Fernsehgeräts (10) oder eines weiteren peripheren Videogeräts (40),
mindestens einen steuerbaren Netzschalter (25), der zwischen Netzausgang (24) und dem Energienetz (5) angeordnet ist und mittels eines Steuersignals (C1) betätigbar ist und
einen IR-Empfänger (22a, 29), der beim Empfang von IR-Signalen ein erstes Steuersignal (C1) zum Betätigen des steuerbaren Netzschalters (25) erzeugt.

2. Fernbedienbare Videogeräteanordnung nach Anspruch 1, **dadurch gekennzeichnet, daß** während des Wartebetriebs ein Netzteil (21, 30) des peripheren Videogeräts dem IR-Empfänger (22a, 29) Betriebsspannung (Uₒ) zuführt.

3. Fernbedienbare Videogeräteanordnung nach Anspruch 1, **dadurch gekennzeichnet,**
**daß** das periphere Videogerät (20) außerdem enthält:
mindestens einen zweiten Netzausgang (27) zum Anschließen der Netzleitung (43) eines weiteren peripheren Videogeräts (40),
mindestens einen zweiten steuerbaren Netzschalter (28), der zwischen Netzausgang (27) und dem Energienetz (5) angeordnet ist und mittels Steuersignalen (C1, C2) betätigbar ist
und einen dritten steuerbaren Netzschalter (31), der zwischen der separaten Netzleitung (23) und einem Netzteil (21) des peripheren Videogeräts (20) angeordnet ist, wobei das peripheren Videogerät (20) zusätzlich ein nichtabschaltbares Bereitschaftsnetzteil (30) enthält.

4. Fernbedienbare Videogeräteanordnung nach Anspruch 1,
**dadurch gekennzeichnet,**
**daß** der IR-Empfänger (22a, 29) beim Empfangen eines IR-Signals unabhängig von dessen Inhalt für eine Dauer von wenigen Sekunden das erste Steuersignal (C1) zum Schließen mindestens eines Netzschalters (25) erzeugt
und **daß** eine Strommeßschaltung (26) den Netzschalter (25) so lange geschlossen hält, wie der Netzstrom (I₁₀) am Netzausgang (24) einen Mindestwert überschreitet.

5. Fernbedienbare Videogeräteanordnung nach Anspruch 1, **dadurch gekennzeichnet, daß** das Fernbedienteil (22) des peripheren Videogeräts (20) beim Empfang von IR-Signalen das erste Steuersignal (C1) zum Schließen von Netzschaltern (25, 28, 31) erzeugt.

6. Fernbedienbare Videogeräteanordnung nach Anspruch 4, **dadurch gekennzeichnet, daß** das Fernbedienteil (22) des peripheren Videogeräts (20) beim Erkennen von IR-Signalen, die das Videogerät (20) selbst betreffen, ein Betätigen des ersten Netzschalters (25) verhindert.

7. Fernbedienbare Videogeräteanordnung nach Anspruch 4, **dadurch gekennzeichnet, daß** das Fernbedienteil (22) des peripheren Videogeräts (20) zum Erkennen und Dekodieren von IR-Signalen ausgelegt ist, die ein Umschalten zwischen dem Wartebetrieb und dem aktiven Betrieb des am Netzausgang (24) angeschlossen Gerätes bewirken, und daß das Fernbedienteil (22) beim Empfang dieser IR-Signale den ersten Netzschalter (25) entsprechend des Signalinhalts betätigt.

8. Fernbedienbare Videogeräteanordnung nach Anspruch 1,
**dadurch gekennzeichnet,**
**daß** das periphere Videogerät (20) ein timergesteuertes Programmierteil (22b) aufweist, welches Daten von ausgewählten Fernsehsendungen speichert, um zum Beginn einer solchen Sendung das Videogerät (20) selbsttätig zu starten,
und **daß** das Fernbedienteil (22) des ersten peripheren Videogerätes (20) im Falle des Vorhandenseins von gültigen gespeicherten Daten oder wenn das erste periphere Videogerät in den aktiven Zustand geschaltet ist, ein zweites Steuersignal (C2) generiert.

## Claims

1. Remote-controllable video apparatus arrangement containing a television apparatus (10) and at least one peripheral video apparatus (20), which provides a signal for reproduction via the television apparatus (10), the two apparatuses (10, 20) each having a separate mains line (13, 23) for feeding mains current (I₁₀, I₂₀) from a power mains (5) and each having a remote control section (12, 22) which reacts to IR signals, enables a changeover between an active mode and a standby mode and is kept operational during the standby mode by the feeding of operating current, both **characterized in that** the peripheral video apparatus (20) contains:
at least one mains output (24) for the connection of the mains line (13, 43) of the television apparatus (10) or of a further peripheral video apparatus (40),
at least one controllable mains switch (25), which is arranged between the mains output (24) and the power mains (5) and can be actuated by means of a control signal (C1), and
an IR receiver (22a, 29), which, upon receiving IR signals, generates a first control signal (C1) for actuating the controllable mains switch (25).

2. Remote-controllable video apparatus arrangement according to Claim 1, **characterized in that**, during the standby mode, a power supply unit (21, 30) of the peripheral video apparatus feeds operating voltage (Uₒ) to the IR receiver (22a, 29).

3. Remote-controllable video apparatus arrangement according to Claim 1, **characterized in that** the peripheral video apparatus (20) additionally contains:
at least one second mains output (27) for the connection of the mains line (43) of a further peripheral video apparatus (40),
at least one second controllable mains switch (28), which is arranged between the mains output (27) and the power mains (5) and can be actuated by means of control signals (C1, C2),
and a third controllable mains switch (31), which is arranged between the separate mains line (23) and a power supply unit (21) of the peripheral video apparatus (20), the peripheral video apparatus (20) additionally containing a standby power supply unit (30) that cannot be turned off.

4. Remote-controllable video apparatus arrangement according to Claim 1, **characterized**
**in that** the IR receiver (22a, 29) generates the first control signal (C1) for closing at least one mains switch (25) upon receiving an IR signal, independently of the content thereof, for a duration of a few seconds,
and **in that** a current measuring circuit (26) keeps the mains switch (25) closed as long as the mains current (I₁₀) at the mains output (24) exceeds a minimum value.

5. Remote-controllable video apparatus arrangement according to Claim 1, **characterized in that** the remote control section (22) of the peripheral video apparatus (20) generates the first control signal (C1) for closing mains switches (25, 28, 31) upon receiving IR signals.

6. Remote-controllable video apparatus arrangement according to Claim 4, **characterized in that** the remote control section (22) of the peripheral video apparatus (20) prevents an actuation of the first mains switch (25) upon identifying IR signals which relate to the video apparatus (20) itself.

7. Remote-controllable video apparatus arrangement according to Claim 4, **characterized in that** the remote control section (22) of the peripheral video apparatus (20) is designed for identifying and decoding IR signals which effect a changeover between the standby mode and the active mode of the apparatus connected to the mains output (24), and **in that** the remote control section (22) actuates the first mains switch (25) in accordance with the signal content upon receiving the said IR signals.

8. Remote-controllable video apparatus arrangement according to Claim 1, **characterized**
**in that** the peripheral video apparatus (20) has a timer-controlled programming section (22b), which stores data of selected television broadcasts in order to start the video apparatus (20) automatically at the beginning of such a broadcast,
and **in that** the remote control section (22) of the first peripheral video apparatus (20) generates a second control signal (C2) in the event of valid stored data being present or if the first peripheral video apparatus is switched into the active state.

## Revendications

1. Dispositif vidéo télécommandé, contenant un appareil de télévision (10) et au moins un appareil vidéo (20) périphérique, fournissant un signal pour la restitution par l'intermédiaire de l'appareil de télévision (10), les deux appareils (10, 20) présentant chacun une ligne de réseau (13, 23) séparée, pour l'amenée de courant du réseau (I₁₀, I₂₀) depuis un réseau d'énergie (5) et présentant chacun une partie de télécommande (12, 22) régissant à des signaux IR, qui permet une commutation entre un fonctionnement actif et un fonctionnement en attente et est maintenu en capacité de fonctionnement pendant le fonctionnement en attente, par amenée de courant de fonctionnement, **caractérisé en ce que** l'appareil vidéo périphérique (20) contient :
au moins une sortie de réseau (24), à raccorder à la ligne de réseau (13, 43) de l'appareil de télévision (10), ou à un autre appareil vidéo périphérique (40),
au moins un interrupteur de réseau (25) commutable, disposé entre la sortie de réseau (24) et le réseau d'énergie (5) et pouvant être actionné à l'aide d'un signal de commande (C1), et
un récepteur IR (22a, 29) qui, lors de la réception de signaux IR, génère un premier signal de commande (C1) pour l'actionnement de l'interrupteur de réseau (25) pouvant être commandé.

2. Dispositif vidéo télécommandé selon la revendication 1, **caractérisé en ce que**, pendant le fonctionnement en attente, une partie de réseau (21, 30) de l'appareil vidéo périphérique amène de la tension de fonctionnement (Uₒ) au récepteur IR (22a, 29).

3. Dispositif vidéo télécommandé selon la revendication 1, **caractérisé en ce que** l'appareil vidéo périphérique (20) contient en outre :
au moins une deuxième sortie de réseau (27) pour raccordement à la ligne de réseau (43) d'un autre appareil vidéo périphérique (40),
au moins un deuxième interrupteur de réseau (28), susceptible d'être commandé, disposé entre la sortie de réseau (27) et le réseau d'énergie (5) et pouvant être actionné à l'aide de signaux de commande (C1, C2),
et un troisième interrupteur de réseau (31) pouvant être commandé, disposé entre la ligne de réseau (23) séparée et une partie de réseau (21) de l'appareil vidéo périphérique (20), l'appareil vidéo périphérique (20) contenant en plus une partie de réseau de disponibilité (30) non déconnectable.

4. Dispositif vidéo télécommandé selon la revendication 1, **caractérisé en ce que**,
le récepteur IR (22a, 29), lors de la réception d'un signal IR, indépendamment de son contenu, génère pour une durée de quelques secondes le premier signal de commande (C1) pour la fermeture d'au moins un interrupteur de réseau (25),
et **en ce qu'**un circuit de mesure de courant (26) maintient l'interrupteur de réseau (25) fermé jusqu'à ce que le courant de réseau (I₁₀) à la sortie du réseau (24) dépasse une valeur minimale.

5. Dispositif vidéo télécommandé selon la revendication 1, **caractérisé en ce que** la partie de télécommande (22) de l'appareil vidéo périphérique (20), lors de la réception de signaux IR, génère le premier signal (C1) pour fermer des interrupteurs de réseau (25, 28, 31).

6. Dispositif vidéo télécommandé selon la revendication 4, **caractérisé en ce que** la partie de télécommande (22) de l'appareil vidéo périphérique (20), lors de l'identification de signaux IR qui concernent l'appareil vidéo (20) lui-même, empêche un actionnement du premier interrupteur de réseau (25).

7. Dispositif vidéo télécommandé selon la revendication 4, **caractérisé en ce que** la partie de télécommande (22) de l'appareil vidéo (20) est conçue pour identifier et décoder des signaux IR, provoquant une commutation entre le fonctionnement en attente et le fonctionnement actif de l'appareil raccordé à la sortie de réseau (24), et **en ce que** la partie de télécommande (22), lors de la réception de ces signaux IR, actionne le premier interrupteur de réseau (25) de manière correspondante au contenu de signal.

8. Dispositif vidéo télécommandé selon la revendication 1, **caractérisé en ce que**
l'appareil vidéo périphérique (20) présente une partie de programmation (22b) commandée par un minuteur, qui mémorise des données venant d'émissions de télévision sélectionnées, pour démarrer l'appareil vidéo (20) automatiquement au début d'une telle émission,
et **en ce que** la partie de télécommande (22) du premier appareil vidéo périphérique (20), en cas de présence de données mémorisées valides ou lorsque le premier appareil vidéo périphérique est branché à l'état actif, génère un deuxième signal de commande (C2).
